# EUROPEAN PATENT SPECIFICATION

(11) **EP 0 356 401 B1**
(45) Date of publication and mention of the grant of the patent: **21.07.1993**
(21) Application number: 89830149.4
(22) Date of filing: 05.04.1989
(51) Int. Cl.: F16H 1/45, F16H 1/44, F16H 1/42

(54) **A differential mechanism with limited sliding**
Differentialmechanismus mit begrenztem Schlupf
Mécanisme différentiel à glissement limité

(30) Priority: 27.07.1988 IT 4823688
(43) Date of publication of application: 28.02.1990
(73) Proprietor: C.G.C. COMPAGNIA GENERALE COMPONENTI S.p.A., I-04011 Aprilia (LT) (IT)
(72) Inventor: Ceccano, Lidano C.G.C. COMPAGNIE GENERALE, I-04011 Aprilia (LT) (IT); Novelli, Massimo C.G.C. COMPAGNIE GENERALE, I-04011 Aprilia (LT) (IT)
(74) Representative: de Simone, Domenico

(56) References cited:
- EP-A- 0 130 806
- US-A- 3 375 736
- US-A- 3 406 593
- US-A- 3 528 323

## Description

This invention relates to a limited-skidding differential gear.

More particularly, this invention relates to a limited skidding differential gear intended for being employed both in off-road vehicles and in vehicles designed for riding on roads.

As is well known, a differential gear is a mechanism that distributes the torque between the two driving wheels so allowing a different speed of rotation of said wheels.

The fundamental function of such mechanism is exerted during the ride of a vehicle along a curved path.

Indeed, during such ride the outer wheel goes a path longer than that of the inner wheel, and the differential mechanism, which allows the two wheels to rotate at different speeds, makes it possible to transmit power to them in an attempt at reducing any possible skidding.

When the riding conditions of the vehicle are close to the gripping limits of the driving wheels, both as a result of high driving torques and of limited gripping conditions, the wheel that exerts the lower gripping can skid over the ground so that the torque which can be transmitted to the same becomes reduced and sometimes it can practically vanish.

As a consequence, in common differential gears in which the torques transmitted to the two driving wheels are of equal values, the wheel goes into free rotation so as to cause the torque on the other wheel to vanish, and so also causing the vehicle to lose driving force as no power is transmitted to the ground.

Numerous devices are known from the prior art which attempt at overcoming the drawback stemming from the fact that the total driving power of the vehicle is in correlation with and is reduced by the driving power of the wheel which most easily undergoes loss of grip.

Accordingly, some differential devices have been designed which are capable of making the values of the torques acting on the two axle shaft different.

Such devices which are generally of quite complex design and of difficult mechanical construction, are based on the principle of making the values of the torques on the driving wheels different by interposing between them a system of friction forces inside the differential device, which system causes the values of the torques transmitted to the axle shafts to be different.

The higher the resisting force exerted by said system of friction forces, the higher is the value of such difference in the torques transmitted.

In differential devices already known in the prior art, the change in the value of the torque acting on the differential mechanism and its distribution between the two axle shafts in the various gripping conditions of the wheel is connected to devices of various kinds which are affected by remarkable drawbacks both as regards the mechanical construction, and, above all, the possibility of supplying suitable ground drive horsepower.

Among such devices, that disclosed in the European Patent EP-A-0130806 is particularly known, said patent providing a member for giving rise to a starting non-skid torque, said member consisting of a braking member acting directly on the sun gears through spring-type members.

Such kind of configuration has the drawback of allowing a very poor possibility of adjusting the value of the starting torque, with the consequent difficulty of obtaining strongly different values of such torque.

Moreover, the operation efficiency of the braking member is strongly limited by its arrangement at the central part of the mechanism as opposed to an extremely reduced braking surface and to quite a difficult lubrication, which surface can easily undergo overheating.

In addition, a further drawback of said device in which the braking member acts directly on the sun gears of the differential mechanism, consists in that it provides a relative sliding between sun gears and axle shafts which, in the presence of a torque to transmit, because of friction arising between the grooved profiles of the sun gear and of the axle shaft engaging with the same, gives rise to an axial force which is detrimental to the bearings of said axle shafts.

In other systems already known, as for instance that disclosed in the GB Patent GB-A-1,168,895 (& US-A-3 375736), which anyway is of extremely complex structure, spring-braking systems are provided which are arranged on both sun gears and on planetary gears, and are free to rotate with consequent undesirable wearing effects.

A further drawback of systems of such kinds consists in that the braking axial thrust component which is proportional to the torque to transmit is not generated as no helical toothing surface is provided on the planetary and on the sun gears.

Moreover, other kinds of differential devices are known, in which the planetary and the sun gears, being not arranged in a continuous way with respect to the central casing, exert unbalanced thrusts on one another which give anomalous wearing problems, so that the efficiency parameters are lowered.

A further feature of many devices already known consists in that a starting non-skid torque is not provided, and in that the efficiency values are strongly lower and the springs of the different types of braking members provided can slide so that they wear down very readily.

Accordingly, the need is clearly evident for a differential gear that allows the value of the torque transmitted to the two axle shafts to be changed as well as the drive horsepower on a wheel to be increased even when the other wheel exerts a lower grip, while keeping a starting non-skid torque, the same differential gear also overcoming the poor efficiency and the wearing down drawbacks shown by the embodiments already known.

In order to satisfy such requirements, the present invention proposes a epicycloidal differential device in which the two sets of planetary gears are so arranged as to form a closed kinematic chain, which at a cross section at right angles to said planetary gears through their portions that are reciprocally engaged forms a full crown, in which device the starting non-skid effect is given by a braking system of the spring type distributed over a surface corresponding to that of the cross-sections of the planetary gears themselves and which acts on the same from the outside in an indirect way, so as to limit their rotation about their axes, and in which device the change in the starting non-skid torque is obtained through adjustment of the load on each spring of the number of planetary gears on which the springs act.

According to the present invention, a configuration of such a differential mechanism is suggested in which the braking force that causes differences in the torques transmitted to the axle shafts is a function of the change in the load of said spring-type braking members, as well as of further components of the friction force arising between the planetary gears and the walls of the casing of the differential device, said components of friction force being caused by the particular helical configuration of the rotating members.

Additionally, a further proposal of the present invention consists in a differential device in which a lubrication system is provided at points where maximum friction is present.

Accordingly, it is a specific object of the present invention a differential gear comprising a casing or carrier provided with a cover and bottom members, said differential device also comprising a first and a second set of planetary gears housed within corresponding housing cavities provided in the inside part of the casing and capable of rotating with respect to the same, wherein said first and said second set of planetary gears engage with a first and a second sun gear which can be connected to the respective axle shafts, wherein said first and second set of planetary gears engage with one another so as to form a closed kinematic chain, and wherein said members of said first and said second set of planetary gears and said first and said second sun gear are of helical toothing outer shape, wherein spring-type braking means are provided at the points corresponding to the outer end of at least one member of said first or said second set of planetary gears, said breaking means being housed within corresponding cavities and wherein non-rotating plate means are interposed between said spring-type braking means and the outer ends of the members of said first and second set of planetary gears, said plate means having a shape in which a projecting portion and a recessed portion are present, the first portion preventin the plate from rotating, while the second one allows the lubrication fluid to pass.

Again according to the present invention, said spring-type braking means provided at the ends are housed in suitable cavities in the casing of the differential device or in the bottom portion and in the cover portion of said casing, or in the planetary gears themselves, in alignment with the housing cavities of the planetary gears, so that the axial thrust exerted by the same can act directly on said planetary gears so as to brake their rotation.

Moreover, again according to the present invention, in order to limit the wear of the springs, plate means are inserted having a first convex projecting portion for locking the plate itself within the corresponding housing, and a recessed portion with respect to the outer profile for allowing the lubrication fluid to pass.

A further advantage of the differential device according to the present invention consists in that said braking members are housed within corresponding cavities arranged in the outer portion of said differential mechanism so as to make the heat exchange with the environment easier.

Moreover, the arrangement according to the present invention in which the braking members are placed at the points corresponding to the ends of the planetary gears causes a reduction in overheating at the same values of dissipated power and of braking power, as the surface subjected to friction forces is larger.

Finally, again according to the present invention, the sense of the helical toothing of said members of the first set of planetary gears, and the sense of the helical toothing of said first sun gear, as well as the sense of the toothing of said members of the second set of planetary gears and said second sun gear, are so arranged that, during the ride of the vehicle in the direction of prevailing motion, the torque transmitted to the casing and from the same to the planetary gears, and then from there to the sun gears, generates an axial force that pushes the sun gears towards the central part and the planetary gears towards the outside so pressing the springs through the plates.

Advantageously, according to the present invention the configuration of the kinematic chain formed by the two sets of planetary gears is such that, at a planar cross section the members of said first and of said second set of gears lie on the same circumference or, alternatively, on two circumferences, one of them being innermost, so as to allow two sun gears of different diameters to be employed which in turn allow the distribution of the torque between the same to be differentiated.

A further advantage of the embodiment of the differential gear according to the present invention consists in that such differential device can be intended also for distributing the motion between any two axles of a vehicle, for instance the front or the rear axle, in addition to its use for differentiating the motion of the wheels on the same axle.

This invention is illustrated in the following drawings, wherein:
Figure 1 represents a side view of a vertical cross section along the line X-X of Figure 2 of the differential gear according to the present invention;
Figure 2 represents a front view of a vertical cross section along the line Y-Y of Figure 1 of the differential gear shown in Figure 1;
Figure 3 represents an exploded view of the differential device of Figure 1;
Figure 4 represents a side view of a vertical cross section of a differential gear according to the present invention employed as a distributing mechanism;
Figure 5 represents a front view of a vertical cross section along the middle plane of the device of Figure 4; and

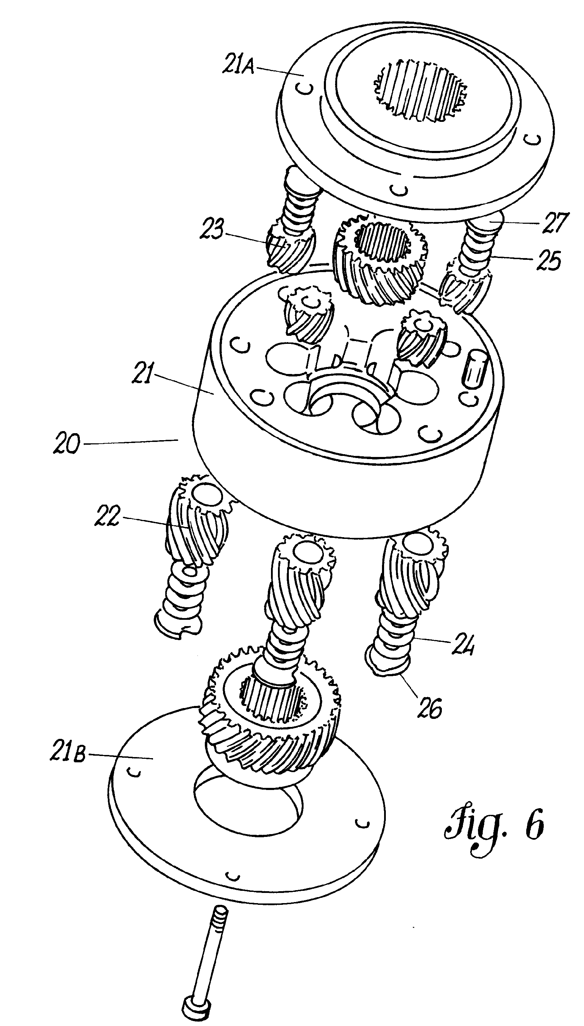

Figure 6 represents an exploded view of the differential mechanism of Figure 4, employed as a distributing device.

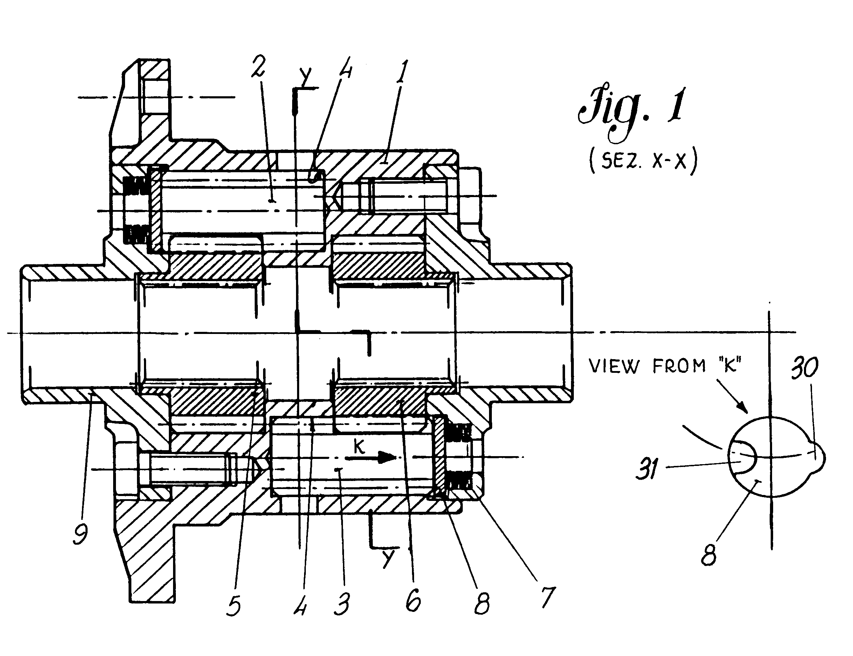

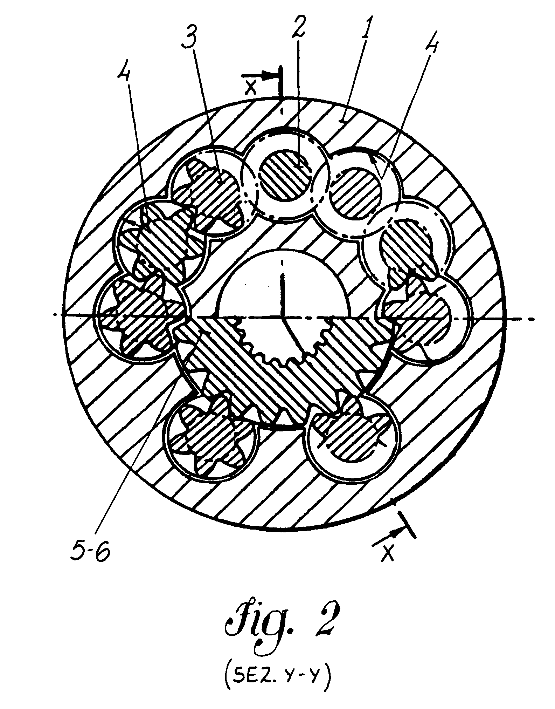

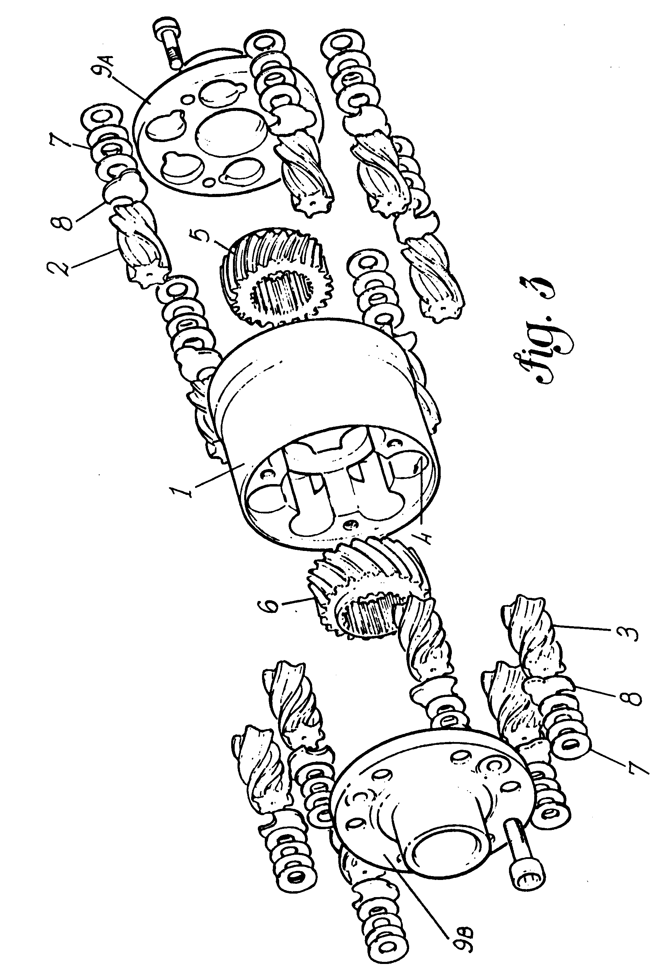

As can be observed from Figure 1, the differential mechanism is made up of a differential casing or carrier 1 containing a first and a second set of planetary gears 2 and 3 which are housed within a corresponding recess 4 obtained inside the casing 1 and which is clearly observable in Figures 2 and 3.

The arrangement of the two sets of planetary gears 2 and 3, as can be observed in Figures 1 and 2, is such that, at the point corresponding to the middle plane of the casing, each planetary gear of the first set engages on both sides with two adjacent planetary gears of the second set, and vice versa.

Similarly, the recesses 4 also follow one another at points corresponding to the middle plane according to the way shown in Figure 2.

The first set of planetary gears 2 engages with a sun gear 5, whereas the second set engages with a sun gear 6, both gears being connectable to the respective axle shafts.

At points corresponding to the outermost end cross-section of each one of the sets of the two planetary gears 2 and 3, spring-type braking members 7 are provided which are assembled within seats which are coaxal to the recesses 4 in which the planetary gears are housed.

Such seats can be provided in the cover portion 9A or in the bottom portion 9B of the differential casing, or in the central body 1 of the casing itself.

The springs 7 act on the planetary gears 2 and 3 through a small plate 8 arranged at the ends of each one of them and housed within the housing cavity of the spring itself.

Such small plate 8, as illustrated in Figures 1 and 3, has a shape on which a rounded projecting part 30 and a recessed part 31 are provided.

Such projecting part 30 is to fix the small plate itself within the corresponding housing cavity of the spring preventing the same from rotating together with the planetary gear, while the recessed part 31 is to allow the lubrication fluid to pass, so that a continuous and controlled lubrication effect throughout the whole system is obtained.

The adjustment of the value of the starting non-skid torque is obviously obtainable by varying the load of each one of the springs acting on the planetary gears, as well as by varying the number of such springs or also varying the number of the planetary gears on which they exert their actions.

Clearly the maximum possible number of braking members corresponds to the maximum number of planetary gears provided in the system.

As can be observed in Figure 2, which shows a front cross sectional view of the differential device according to the present invention, the central portion of the mechanism is empty at the points corresponding to the middle plane.

As can be observed in Figure 3, both the planetary gears 2 and 3 and the sun gears 5 and 6 have helical toothing outer surfaces.

Such members are assembled within the differential casing or carrier, the sense of the helical toothing being oriented so that, when the vehicle is riding in the sense of the prevailing direction, to torque transmitted from the casing 1 and from there to the planetary gears, and from them to the sun gears, pushes the sun gears towards the central part and the planetary gears towards the outside so pressing the springs 7 through the small plates 8.

If one of the two wheels loses grip on the ground and has a tendency to skid with zero torque at a speed higher than the speed of the other wheel, a relative motion is generated between the component parts of the differential device, as one of the two sun gears is to rotate at a higher speed than the other one.

Accordingly, the two sets of planetary gears 2 and 3 are put into rotation, and a starting resisting torque is regenerated on said sets, as they are braked by said small plates 8, said torque allowing drive horsepower to be kept on the wheel that adheres to the ground.

Such effect is additionally increased by the effect given by the helical toothing which, giving rise to further axial thrusts on both the planetary and the sun gears, increases the value of the braking torque.

The embodiment disclosed above can also be employed to distribute motion between any two axles of a vehicle such as for instance the front and the rear axle of a four wheel drive vehicle, in addition to its employment for differentiating motion between wheels on the same axle.

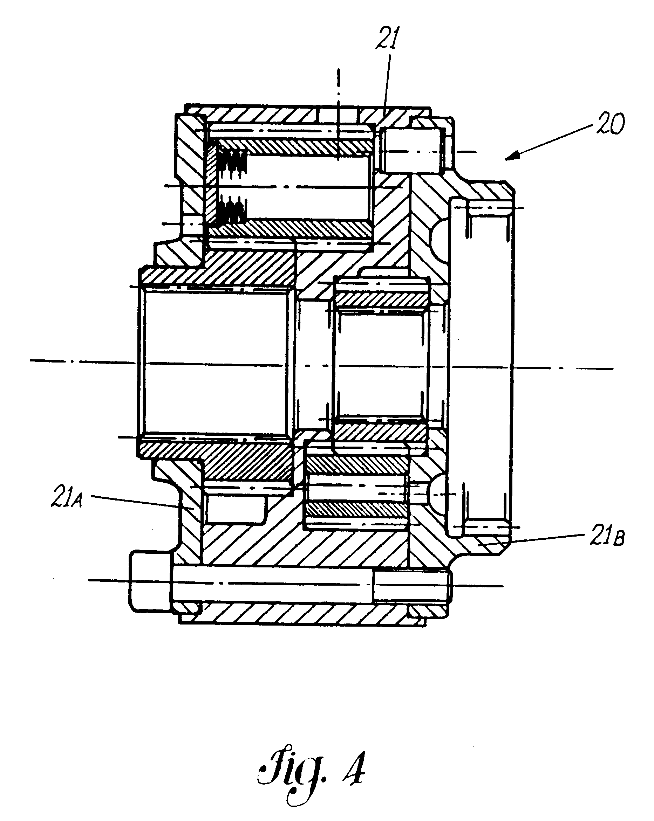

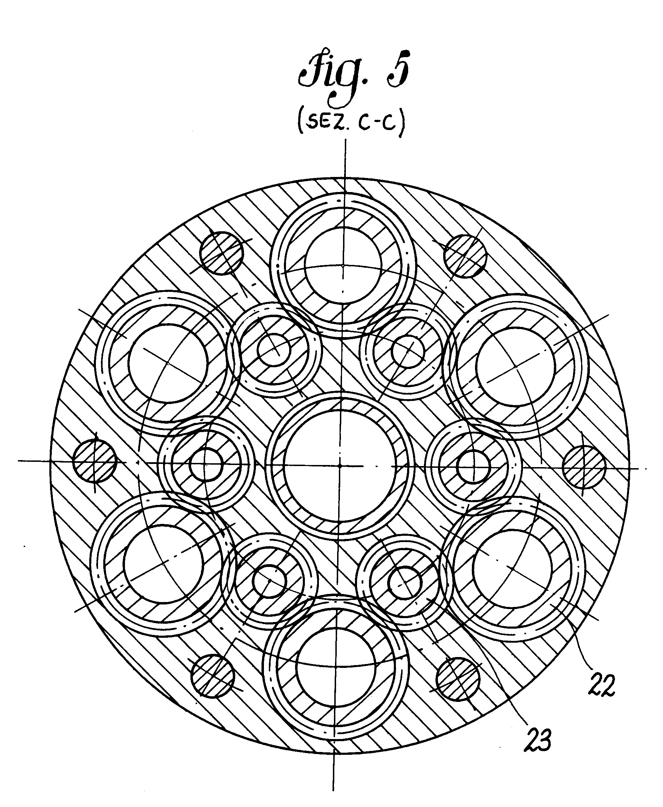

Figures 4 and 5 illustrate the application of an alternative embodiment 20 of the differential gear according to the present invention as a distributing device, arranged in the central part between front and rear axles of four wheel drive vehicles.

The distributing differential mechanism 20 has the same structural arrangements as those of the differential mechanism illustrated in Figures 1-4.

Indeed, also in that case the casing 21 provided with a cover 21A and of a bottom member 21B comprises in its central part a set of recesses for housing the two sets of planetary gears 22 and 23.

The two sets of springs 24 and 25 with their respective plates 26 and 27 are housed in that case within the planetary gears. Such small plates 26 and 27 have a projecting portion that locks their rotation.

In the embodiment shown in said Figure, the distribution of the torque values between the two axles is 60 %-40 %, and it is obtained through changing the gear ratios between the planetary and the sun gears.

Moreover, as can be observed in Figure 5, the two sets of planetary gears 22 and 23 are arranged on two different diameters which allow some gears to be employed having different diameters, so that the differentiation of the values of the torque transmitted is possible.

## Claims

1. A differential gear comprising a casing or carrier (1) provided with a cover and with bottom members, said differential gear also comprising a first and a second set of planetary gears (2,3) that are housed within corresponding housing cavities (4) provided in the inner part of said casing (1) and rotatable with respect to the same, wherein said first and said second set of planetary gears (2,3) engage with a first and a second sun gears (5,6) which are both connectable to the respective axle shafts, wherein said first and said second set of planetary gears (2,3) engage with one another so as to form a closed kinematic chain and wherein said members of said first and said second set of planetary gears (2,3) as well as said first and said second sun gears (5,6) have a helical toothing outer shape, the configuration of said kinematic chain being such that in a planar cross-section the axes of said members of said first and said second set of planetary gears lie on the same circumference, said differential gear being characterized in that spring-type braking means (7) are provided at the points corresponding to the outer end of at least one member respectively of said first and said second set of planetary gears, said braking means being housed within corresponding cavities, and also characterized in that non-rotating plate means (8) are interposed between said spring-type braking means (7) and the outer ends of the members of said first and second set of planetary gears (2,3) said plate means (30) having both a projecting (30) and a recessed portion (31), said projecting portions being located in the corresponding cavities of the housing, where the springs (7) are located.

2. A differential gear according to claim 1, characterized in that said spring-type braking members (7) provided at points corresponding to the end of at least one planetary gear of said first or of said second set are housed within aligned casing or carrier (1).

3. A differential gear according to claim 1, characterized in that said spring-type braking members (7) provided at the point corresponding to the end of at least one planetary gear of said first and/ore of said second set are housed within aligned cavities provided in the bottom (9B) and the cover (9A) walls of the differential gear casing (1).

4. A differential gear according to claim 1, characterized in that said spring-type braking members (7) provided at the point corresponding to the end of at least one planetary gear (2,3) of said first or of said second set are housed within the inner part of an end of said planetary gears themselves.

5. A differential gear according to claim 1, characterized in that said plate means (8) have a first convex projecting part (30) for fastening the small plate within the corresponding cavity, and also a part (31) which is recessed with respect to the whole profile for allowing the lubricating fluid to pass.

6. A differential gear according to claim 1, characterized in that said braking members (7,8) are arranged in the outer portion of said differential device.

7. A differential gear according to claim 1, characterized in that the sense of the helical toothing of said members of the first set of planetary gears (2,3) and of the helical toothing of said first sun gear (5,6) are so arranged that when the vehicle is reading in the main direction of motion the torque transmitted to the differential casing (1) and from there to the planetary gears, gives rise to an axial force that pushes the planetary gears, gives rise to an axial forces that pushes the sun gear (5,6) towards the central part and the planetary gears (2,3) towards the outer part.

8. A differential gear, comprising a casing (21) or carrier provided with bottom and cover members (21A,21B), as well as a first and a second set of planetary gears (22,23) housed within corresponding housing cavities provided in the inside part of the casing and rotatable with respect to the casing itself, wherein said first and said second set of planetary gears (22,23) engage with a first and a second sun gear, which are connectable to the respective axle shafts, wherein said first and second set of planetary gears (22,23) engage with one another so as to form a closed kinematic chain, and wherein said members of said first and said second set of planetary gears (22,23), as well as said first and said second sun gear are of helical toothing outer shape, said differential device being characterized in that spring-type braking means (24,25) are provided at the points corresponding to the outer end of at least one member of said first and said second set of planetary gears, said braking means being housed within the cavities of the planetary gears (22,23) themselves by interposition of plate means (26,27), the rotation of said plate and springs means being locked within the cavities of the planetary gears.

9. A device according to claim 8, characterized in that the configuration of such kinematic chain formed by the two sets of planetary gears (22,23) is such that, at a planar cross-section, the axes of said members of said first and said second set of gear lie on the same circumference.

10. A device according to claim 8, characterized in that the configuration of such kinematic chain formed by the two sets of planetary gears (22,23) is such that, at a planar cross section, the axes of said members of said first (22) and said second (23) set of gears lie on two circumferences which are inside one another.

## Patentansprüche

1. Differentialgetriebe mit einem Deckel- und Bodenteile aufweisenden Gehaeuse oder Traeger (1), wobei eine erste und eine zweite Gruppe von Planetengetrieben (2,3) vorgesehen ist, die in entsprechenden Aufnahmeaushohlungen (4) im inneren Teil des genannten Gehaeuses (1) gegenueber demselben drehbar angeordnet sind und mit einem ersten und zweiten Sonnengetrieben (5,6) in Eingriff kommen, die mit zugehoerigen wellen Kuppelbar sind, und wobei die genannten erste und zweite Gruppe von Planentengetrieben (2,3) ineinander eingreifen und so eine geschlossene kinematische Kette bilden, wobei die einzelnen Glieder der vorgenannten ersten und zweiten Gruppe von Planetengetrieben (2,3) sowie das vorgenannte erste und zweite Sonnengetriebe (5,6) eine Schraegverzahnung aufweisen und wobei die vorgenannte kinematische Kette so ausgestaltet ist, dass in einem Querschnitt die Axsen der genannten Glieder der ersten und zweiten Gruppe von Planetengetrieben (2,3) im gleichen Umfangskreis liegen, dadurch gekennzeichnet, dass zwischen federartigen Bremsemitteln (7) und dem Aussenende der Glieder der vorgenannten ersten und zweiten Gruppe von Planetengetrieben (2,3) nicht drehbare Scheibemittel (8) angeordnet sind, die einen Einschnitt (31) und einen Vorsprung (30) aufweisen, der in je einer Aushohlung des Gehaeuses eingelegt sind, in der sich die Feder (7) befinden.

2. Differentialgetriebe nach Anspruch 1, dadurch gekennzeichnet, dass die vorgenannten federartigen Bremsemittel (7) sich an einer, dem Ende mindestens eines Planetengetriebes der vorgenannten ersten oder der vorgenannten zweiten Gruppe entsprechenden Stelle befinden und innerhalb des Gehaeuses (1) angeordnet sind.

3. Differentialgetriebe nach Anspruch 1, dadurch gekennzeichnet, dass die vorgenannten federartigen Bremsemittel (7) sich an einer dem Ende mindestens eines Planetengetriebes (2,3) der vorgenannten ersten und/oder zweiten Gruppe entsprechenden Stelle befinden und innerhalb von in der Boden (9B)- und Deckel (9A)- Wand des Gehaeuses (1) vorgesehenen fluchtenden Aushohlungen angeordnet sind.

4. Differentialgetriebe nach Anspruch 1, dadurch gekennzeichnet, dass die vorgenannten federartigen Bremsemittel (7) sich an einer dem Ende mindestens eines Planetengetriebes (2,3) der vorgenannten ersten und/oder zweiten Gruppe entsprechenden Stelle befinden und innerhalb des inneren Teiles eines Endes der vorgenannten Planetengetriebe selber angeordnet sind.

5. Differentialgetriebe nach Anspruch 1, dadurch gekennzeichnet, dass die vorgenannten Scheibenmittel (8) einen ersten vorsprungenden konvexen Teil zur Befestigung der kleinen Scheibe innerhalb einer entsprechenden Aushohlung und auch einen gegenueber dem ganzen Scheibenumfang ausgehohlten Teil zum Durchfluss einer Schmierfluessigkeit aufweisen.

6. Differentialgetriebe nach Anspruch 1, dadurch gekennzeichnet, dass die vorgenannten Bremsemittel (7,8) im Aussenteil des Differentialgetriebes angeordnet sind.

7. Differentialgetriebe nach Anspruch 1, dadurch gekennzeichnet, dass die Richtung der Schraegverzahnung der vorgenannten Glieder der ersten Gruppe der Planetengetriebe (2,3) und diejenige der Schraegverzahnung des vorgenannten ersten Sonnengetriebes (5,6) so gewaehlt sind, dass wenn das Fahrzeng in Hauptrichtung faehrt, das an das Differentialgehaeuse (1) und von diesem and die Planetengetriebe uebertragene Drehmomemnt eine achsiale Kraft verursacht, die das Sonnengetriebe (5,&) zum Mittelteil und Die Planetengetriebe (2,3) zum Aussenteil drueckt.

8. Differentialgetriebe mit einem einen Boden- und Deckelteil aufweisenden Gehaeuse (21) oder Traeger, sowie mit einer ersten und zweiten Gruppe von Planetengetrieben (22,23), die in entsprechenden Aufnahmeaushohlungen im inneren Teil des Gehaeuses gegenueber demselben drehbar angeordnet sind und mit einem ersten und zweiten Sonnengetrieben in Eingriff stehen, die mit zugehoerigen Wellen kuppelbar sind, wobei die genannten erste und zweite Gruppe von Planetengetrieben (22,23) ineinander eingreifen und so eine geschlossene kinematische Kette bilden und wobei die einzelnen Glieder der vorgenannten ersten und zweiten Gruppe von Planetengetrieben, sowie des vorgenannte erste und zweite Sonnengetriebe eine Schraegverzahnung aufweisen, dadurch gekennzeichnet, dass Federbremsemittel (24,25) an den dem ausserem Ende mindestens eines Gliedes der vorgenannten ersten und zweiten Gruppe von Planetengetrieben (22,23) mit Zwischenschaltung von Scheibemitteln (26,27) angeordnet sind und die Drehung der vorgenannten Scheibe- und Federbremsemittel innerhalb der Aushohlungen der Planetengetrieben blockiert wird.

9. Vorrichtung nach Anspruch 8, dadurch gekennzeichnet, dass die durch die zwei Gruppen von Planetengetrieben (22,23) gebildete kinematische Kette so ausgebildet ist, dass die Axen der genannten Glieder der genannten ersten und zweiten Gruppe im Querschnitt auf dem gleichen Umfang liegen.

10. Vorrichtung nach Anspruch 8, dadurch gekennzeichnet, dass die durch die beiden Gruppen von Planetengetrieben (22,23) gebildete kinematische Kette so ausgebildet ist, dass die Axen der genannten Glieder der genannten ersten (22) und zweiten (23) Getriebegruppe auf zwei ineinanderliegenden Umfangskreisen liegen.

## Revendications

1. Mécanisme différentiel à glissement limité, comprenant une boîte ou un support (1) muni d'un couvercle et des éléments de fond, ce mécanisme différential comprenant aussi une premiere et un deuxième série des engrenages planétaires (2,3) placées dans des cavités correspondentes (4) prevues dans la partie intérieure de ladite boîte (1) et tournantes au regard de la même, dans lequel ladite premiere et deuxième série des engrenages planétaires (2,3) s'engrenent avec un premier et un deuxième engrenage satellite (5,6) qui sont enclencheables aux respectifs arbres, dans lequel ladite premiere et ladite deuxième série des engrenages planétaires (2,3) s'engrenent l'une avec l'autre de façon à former une chaîne cinématique fermée et dans lequel lesdits éléments de ladite premiere et deuxième série des engrenages planétaires (2,3) ainsi que lesdits engrenages satellites (5,6) ont une forme exterièure à denture hélicoidale, la conformation de ladit chaîne cinématique étant de sorte que dans une section trasversale plate les axes des dits éléments de ladite premiere et de ladite deuxième série des engrenages planétaires se trouvent dans la même circonférence, ledit mécanisme différentiel étant caractérisé en ce que des moyens de frein du type à ressort (7) sont prevus en points correspondants au bout extérieur au moins d'un élément de ladite premiere et de ladite deuxième série d'engrenages planétaires, respectivement, lesdits moyens de frein étant placés dans les cavités correspondantes et caractérisé aussi en ce que moyens à plate non-tournants (8) sont interposés entre lesdits moyens de frein à rassort (7) et les bouts extèrieurs des éléments de ladite premiere et de ladite deuxième série d'engrenages planétaires (2,3), lesdits moyen à plate (8) ayant une partie en saillie (30) et une partie à crèneau (31), lesdites portions en saillie étant placées dans les correspondantes cavités de la boîte, où les ressorts son placés.

2. Mécanisme différentiel selon la revendication 1, caractérisé en ce que lesdits moyens de frein à ressort (7), prévus aux points correspondents aux bouts au moins d'un engrenage planétaires de ladite premiere ou de ladite deuxième série, sont placés dans la boîte ou support aligné (1).

3. Mécanisme différentiel selon la revendication 1, caractérisé en ce que lesdits moyens de frein à ressort (7), prévus aux points correspondents aux bouts au moins d'un engrenage planétaires de ladite premiere et/ou de ladite deuxième série, sont placés dans les cavités alignées prévues dans les parois du fond (9B) et du couvercle (9A) de la boîte (1) du mécanisme différentiel.

4. Mécanisme différentiel selon la revendication 1, caractérisé en ce que lesdits moyens de frein à ressort (7), prévus aux points correspondents aux bouts au moins d'un engrenage planétaires de ladite premiere et/ou de ladite deuxième série, sont placés dans la partie entérieure d'un bout desdits engrenages planétaires eux-mêmes.

5. Mécanisme différentiel selon la revendication 1, caractérisé en ce que lesdits moyens à plate (8) ont une premiere portion convexe en saillie (30) pour fixer la petite plate dans la cavité correspondente et aussi une portion (31) qui est rainé au regard du profile entier pour laisser-passer le fluid lubrifiant.

6. Mécanisme différentiel selon la revendication 1, caractérisé en ce que lesdits moyens de frein (7,8) sont placés dans la portion extérieure dudit mécanisme différentiel.

7. Mécanisme différentiel selon la revendication 1, caractérisé en ce que la direction de la denture hélicoidale desdits éléments de la premiere série des engrenages planétaires (2,3) et de la denture hélicoidale dudit premier engrenages satellite (5,6) sont orientés de sorte que quand le vehicule marche dans la direction principale du mouvement, la couple trasmise à la boîte (1) du différentiel et de la boite aux engrenages planétaires, engendre une force axiale qui pousse les engrenages satellites (5,6) vers la part centrale et les engrenages planétaires (2,3) vers la part extérieure.

8. Mécanisme différentiel, comprenant une boite (21) ou support muni d'un couvercle et des éléments de fond (21A,21B), ainsi que une premiere et une deuxième série des engrenages planétaires (22,23) placés dans de cavités correspondantes prévues dans la partie intérieure de ladite boite et tournantes au regard de la même, dans lequel ladite premiere et la dite deuxième série des engrenages planétaires (22,23) s'engrenent avec un premier et un deuxième engrenage satellite, qui sont enclencheable aux respectifs arbres, dans lequel ladite premiere et la dite deuxième série des engrenages planétaires s'engrenent l'une avec l'autre de façon à former und chaîne cinématique fermée et dans lequel lesdits éléments de ladite premiere et de ladite deuxième série des engrenages planétaires (22,23) ainsi que lesdits engrenages satellites (5,6) ont une forme extèrieure à denture hélicoidale, ledit mécanisme différentiel étant caractérisé en ce que des moyens de frein du type à ressort (24,25) sont prevus en points correspondants au bout extérieur au moin d'un élément de ladite premiere et de ladite deuxième série des engrenages planétaires, lesdits moyens de frein étant placés dans les cavités des engrenages planétaires (22,23) par interposition des moyens à plate (26,27), la rotation desdits moyens à plate et à ressort étant bloquée dans les cavités des engrenages planétaires.

9. Mécanisme différentile selon la revendication 8, caractérisé en ce que la configuration de ladite chaîn formée par les deux séries des engrenages planétaires (22,23) est de sorte que dans une section transversale plate, les axes desdits éléments de la dite premiere et de ladite deuxième série des engrenages se trouvent sur la même circonférance.

10. Mécanisme différentile selon la revendication 8, caractérisé en ce que la configuration de ladite chaîn formée par les deux séries des engrenages planétaires (22,23) est de sorte que, dans une section transversale, les axes desdits éléments de ladite premiere série (22) et de ladite deuxième série (23) des engrenages se trouvent sur les deux circonférences qui sont l'une dans l'autre.
